# DEMANDE DE BREVET EUROPEEN

(11) **EP 3 805 512 A1**
(43) Date de publication de la demande: **14.04.2021**
(21) Numéro de dépôt: 20200186.3
(22) Date de dépôt: 06.10.2020
(51) Int. Cl.: E06B 9/13, E06B 9/88, G01V 8/20, F16P 3/14

(54) **BARRE PALPEUSE VIRTUELLE POUR PORTE DE MANUTENTION**

(30) Priorité: 09.10.2019 FR 1911203
(71) Demandeur: SOFINECO - Société pour l'Étude et le Financement d'Entreprises Industrielles et Commerciales, 69150 Décines-Charpieu (FR)
(72) Inventeur: POYET, Armand, 69009 LYON (FR)
(74) Mandataire: Vuillermoz, Bruno

(57) **Abrégé**

La barre palpeuse suivant la présente invention pour rideau souple (5) d'une porte de manutention (1) se déplaçant dans un plan vertical le long de montants opposés (2, 3) entre une position d'ouverture et une position de fermeture, **caractérisée en ce** qu'elle est constituée :
• de faisceaux de sécurité horizontaux **(fs1, fs2, fs3)** positionnés dans les montants opposés (2, 3) et à partir du seuil (s) de la porte de manutention (1) sur **n** position(s) verticale(s) de manière à délimiter une zone de sécurité virtuelle (**ze**) à l'intérieur duquel se déplace le rideau souple (5) de ladite porte de manutention (1);
• d'un dispositif de mesure et de localisation (7) de la position du rideau souple (5) lors de ses déplacements dans la zone de sécurité (**ze**) et plus particulièrement de la partie inférieure dudit rideau;
• et des moyens électronique (8) permettant d'analyser en temps réel les informations transmises par les faisceaux et le dispositif de mesure afin de vérifier que le rideau souple ne rencontre aucun obstacle lors de ses déplacements en s'assurant de son passage devant les faisceaux de sécurité.

## Description

La présente invention est relative à une barre palpeuse virtuelle assurant la sécurisation des déplacements verticaux d'un rideau souple ou écran d'une porte de manutention à ouverture rapide.

Généralement les rideaux souples de porte de manutention connu en soi comportent des fourreaux dans lesquels sont agencés respectivement une traverse horizontale de renfort dont les extrémités coopèrent avec un dispositif de guidage formant glissière prévue dans les montants verticaux et opposés de la porte de manutention.

D'autre part le rideau souple comporte à son extrémité libre et inférieur un bord primaire de fermeture dans lequel est aménagé un autre fourreau recevant une barre de seuil ou barre palpeuse assurant la sécurité et la remonté de la porte de manutention lorsque ledit rideau rencontre un obstacle lors de ses déplacements verticaux.

L'objet de la présente invention est de concevoir une barre palpeuse virtuelle créant un champ de sécurité obtenu par des faisceaux répartis sur la hauteur de la porte de manutention et permettant de contrôler la trajectoire du rideau souple.

La barre palpeuse suivant la présente invention est constituée :
- de faisceaux de sécurité horizontaux positionnés dans les montants opposés et à partir du seuil de la porte de manutention sur n position(s) verticale(s) de manière à délimiter une zone de sécurité virtuelle à l'intérieur duquel se déplace le rideau souple de ladite porte de manutention;
- d'un dispositif de mesure et de localisation de la position du rideau souple lors de ses déplacements dans la zone de sécurité et plus particulièrement de la partie inférieure dudit rideau,
- et des moyens électronique permettant d'analyser en temps réel les informations transmises par les faisceaux et le dispositif de mesure afin de vérifier que le rideau souple ne rencontre aucun obstacle lors de ses déplacements en s'assurant de son passage devant les faisceaux de sécurité.

La barre palpeuse suivant la présente invention est constituée dans la zone de sécurité verticale au moins trois faisceaux de sécurité horizontaux positionnés à partir du seuil de la porte de manutention.

La barre palpeuse suivant la présente invention est constituée de faisceaux de sécurité horizontaux qui sont espacés entre eux d'une distance verticale d afin de constituer un espace de contrôle.

Également, l'objet de la présente invention est relatif à un procédé de fonctionnement de la barre palpeuse virtuelle qui consiste :
I. à enclencher la descente du rideau souple de la porte de manutention, afin que ledit rideau passe devant le premier faisceau de sécurité ;
II. à couper la première fonction de sécurité directe du premier faisceau de sécurité horizontal,
III. à contrôler le passage du rideau souple dans le champ du premier faisceau de sécurité horizontal :
   a. si le rideau souple ne croise pas le champ du premier faisceau de sécurité horizontal, alors remonté dudit rideau,
   b. si le rideau souple croise le champ du premier faisceau de sécurité horizontal alors la descente dudit rideau continue jusqu'au prochain faisceau de sécurité horizontal,
IV. à chaque passage du rideau souple lors de sa descente devant un autre faisceau de sécurité horizontal procéder aux étapes précédentes jusqu'à la position de fermeture dudit rideau souple.

La description qui va suivre en regard des dessins annexés, donnés à titre d'exemples non limitatifs permettra de mieux comprendre l'invention, les caractéristiques qu'elle présente, et les avantages qu'elle est susceptible de procurer :

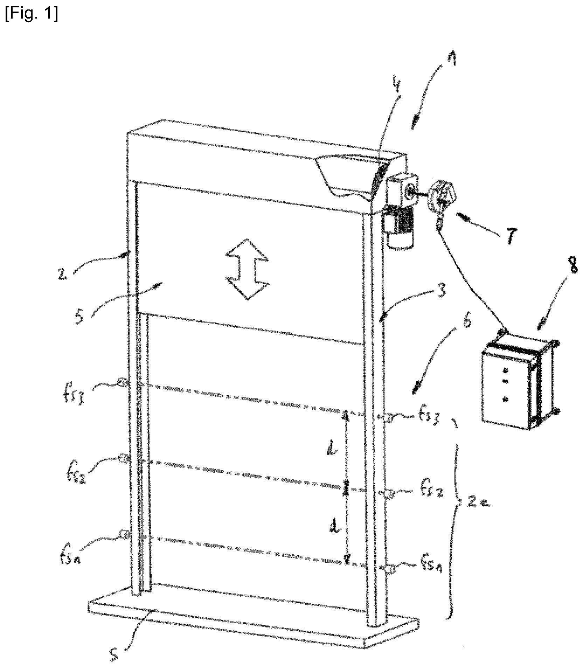

[Fig. 1] est une vue en perspective illustrant une porte de manutention à rideau souple comportant une barre palpeuse virtuelle de sécurisation suivant la présente invention.

On a montré en figure 1 une porte de manutention 1 comprenant entre des montants verticaux et opposés 2, 3 un tambour d'enroulement 4 guidé en rotation de manière à assurer les déplacements d'un rideau souple 5 entre une position d'ouverture et une position de fermeture.

La porte de manutention 1 comporte une barre palpeuse 6 permettant de prévenir le contact des bords du rideau souple 5 lors de sa fermeture avec un obstacle.

La barre palpeuse 6 comprend des faisceaux de sécurité horizontaux **fs** formant une barrière immatérielles placée de part et d'autre du rideau souple 5 et dans sa trajectoire de déplacement comme, par exemple, à l'intérieur de glissières ménagées dans les montants verticaux et opposés 2, 3 de la porte de manutention 1.

Les faisceaux de sécurité horizontaux **fs** sont positionnés à partir du seuil **S** de la porte de manutention 1 sur **n** position(s) verticale(s) de manière à délimiter une zone de sécurité **ze** à l'intérieur duquel se déplace le rideau souple 5 de ladite porte de manutention.

La zone de sécurité verticale **ze** est constituée d'au moins trois faisceaux de sécurité horizontaux **fs1, fs2,** et **fs3** positionnés à partir du seuil **S** de la porte de manutention 1.

On note que les faisceaux de sécurité horizontaux **fs1, fs2, fs3** permettent de créer un champ vertical contrôlant la trajectoire du rideau souple 5 de la porte de manutention 1.

Les faisceaux de sécurité horizontaux **fs1, fs2, fs3** sont espacés entre eux d'une distance verticale **d** afin de constituer un espace de contrôle des déplacements du rideau souple 5.

La barre palpeuse 6 comporte un dispositif de mesure et de localisation 7 permettant d'enregistrer la position du rideau souple 5 lors de ses déplacements dans la zone de sécurité **ze** et plus particulièrement de la partie inférieure dudit rideau.

En outre la barre palpeuse 6 comprend des moyens électronique 8 permettant d'analyser en temps réel les informations transmises par les faisceaux **fs1, fs2, fs3** et le dispositif de mesure 7 afin de vérifier que le rideau souple 5 ne rencontre aucun obstacle lors de ses déplacements en s'assurant de son passage devant lesdits faisceaux de sécurité.

L'objet de la présente invention consiste également en un procédé de fonctionnement de la porte de manutention 1 lorsque cette dernière est équipée d'une barre palpeuse virtuelle 6 de sécurisation des bords du rideau souple 5.

Le procédé de fonctionnement consiste :
I. à enclencher la descente du rideau souple 5 de la porte de manutention 1, afin que ledit rideau passe devant le premier faisceau de sécurité ;
II. à couper la première fonction de sécurité directe du faisceau de sécurité horizontal **fs3** ;
III. à contrôler le passage du rideau souple 5 dans le champ du premier faisceau de sécurité horizontal **fs3** :
   a. si le rideau souple 5 ne croise pas le champ du premier faisceau de sécurité horizontal **fs3,** alors remonté dudit rideau,
   b. si le rideau souple 5 croise le champ du premier faisceau de sécurité horizontal **fs3,** alors la descente dudit rideau continue jusqu'au prochain faisceau de sécurité horizontal **fs2, fs1,**
IV. à chaque passage du rideau souple 5 lors de sa descente devant un autre faisceau de sécurité horizontal **fs2, fs1,** procéder aux étapes précédentes jusqu'à la position de fermeture dudit rideau souple 5.

On constate que la barre palpeuse virtuelle 6 permet par l'intermédiaire du dispositif de mesure et de localisation (7) et des moyens électroniques (8) de maitriser les coupures entre chaque barrage de sécurité définit dans la zone de sécurité **ze** par les faisceaux de sécurité **fs1, fs2,** et **fs3.**

Il doit d'ailleurs être entendu que la description qui précède n'a été donnée qu'à titre d'exemple, et qu'elle ne limite nullement le domaine de l'invention dont on ne sortirait pas en remplaçant les détails d'exécution décrits par tout autre équivalent.

## Revendications

1. Barre palpeuse pour rideau souple (5) d'une porte de manutention (1) se déplaçant dans un plan vertical le long de montants opposés (2, 3) entre une position d'ouverture et une position de fermeture, **caractérisée en ce qu'**elle est constituée :
• de faisceaux de sécurité horizontaux **(fs1, fs2, fs3)** positionnés dans les montants opposés (2, 3) et à partir du seuil (s) de la porte de manutention (1) sur n position(s) verticale(s) de manière à délimiter une zone de sécurité virtuelle **(ze)** à l'intérieur duquel se déplace le rideau souple (5) de ladite porte de manutention (1);
• d'un dispositif de mesure et de localisation (7) de la position du rideau souple (5) lors de ses déplacements dans la zone de sécurité **(ze)** et plus particulièrement de la partie inférieure dudit rideau,
• et des moyens électroniques (8) permettant d'analyser en temps réel les informations transmises par les faisceaux et le dispositif de mesure afin de vérifier que le rideau souple ne rencontre aucun obstacle lors de ses déplacements en s'assurant de son passage devant les faisceaux de sécurité.

2. Barre palpeuse pour rideau souple (5) d'une porte de manutention (1) suivant la revendication 1, **caractérisée en ce qu'**elle comprend dans la zone de sécurité verticale **(ze)** au moins trois faisceaux de sécurité horizontaux **(fs1, fs2, fs3)** positionnés à partir du seuil (s) de la porte de manutention (1).

3. Barre palpeuse pour rideau souple (5) d'une porte de manutention (1) suivant la revendication 1, **caractérisée en ce que** les faisceaux de sécurité horizontaux **(fs1, fs2, fs3)** permettent de créer un champ vertical contrôlant la trajectoire du rideau souple (5) de la porte de manutention (1).

4. Barre palpeuse suivant la revendication 1, **caractérisée en ce que** les faisceaux de sécurité horizontaux **(fs1, fs2, fs3)** sont espacés entre eux d'une distance verticale **(d)** afin de constituer un espace de contrôle.

5. Procédé de fonctionnement d'une porte de manutention (1) comprenant une barre palpeuse virtuelle (6) assurant le guidage d'un rideau souple (5) déplacé d'une position d'ouverture à une position de fermeture par l'intermédiaire d'un tambour d'enroulement (4) entrainé et guidé en rotation entre des montants verticaux et opposés (2,3) suivant la revendication 1, **caractérisé en ce qu'**il consiste :
I. à enclencher la descente du rideau souple (5) de la porte de manutention (1), afin que ledit rideau passe devant le premier faisceau de sécurité ;
II. à couper la première fonction de sécurité directe du premier faisceau de sécurité horizontal **(fs3)** ;
III. à contrôler le passage du rideau souple (5) dans le champ du premier faisceau de sécurité horizontal **(fs3)** :
a. si le rideau souple (5) ne croise pas le champ du premier faisceau de sécurité horizontal **(fs3),** alors remonté dudit rideau,
b. si le rideau souple (5) croise le champ du premier faisceau de sécurité horizontal **(fs3),** alors la descente dudit rideau continue jusqu'au prochain faisceau de sécurité horizontal **(fs2, fs1),**
IV. à chaque passage du rideau souple (5) lors de sa descente devant un autre faisceau de sécurité horizontal **(fs2, fs1),** procéder aux étapes précédentes jusqu'à la position de fermeture dudit rideau souple (5).
